# EUROPEAN PATENT SPECIFICATION

(11) **EP 2 155 625 B1**
(45) Date of publication and mention of the grant of the patent: **08.05.2019**
(21) Application number: 08761682.7
(22) Date of filing: 20.05.2008
(51) Int. Cl.: C04B 20/10, C04B 111/10, C04B 111/20, C09D 1/06, C09D 5/16, C08K 3/22, C08K 9/12, C04B 28/02

(54) **A PHOTOCATALYTICALLY ACTIVE COMPOSITION AND A METHOD FOR PREPARATION THEREOF**
PHOTOKATALYTISCH AKTIVE ZUSAMMENSETZUNG UND HERSTELLUNGSVERFAHREN DAFÜR
COMPOSITION PHOTOCATALYTIQUEMENT ACTIVE ET SON PROCÉDÉ DE PRÉPARATION

(30) Priority: 21.05.2007 FI 20070395
(43) Date of publication of application: 24.02.2010
(73) Proprietor: Cementa AB, 100 74 Stockholm (SE)
(72) Inventor: BÖÖK, Tommy, FI-28100 Pori (FI); ERIKSSON, Bo-Erik, FI-00300 Karis (FI); VIGGH, Erik, S-SE-273 71 Lövestad (SE)
(74) Representative: Berggren Oy, Helsinki & Oulu
(86) International application number: PCT/FI2008/050286
(87) International publication number: WO 2008/142205

(56) References cited:
- EP-A- 1 405 835
- WO-A-2008/055542
- DE-A1-102005 052 397
- JP-A- 2002 201 059
- JP-A- 2004 277 235
- JP-A- 2005 125 132
- US-A1- 2006 116 279
- US-A1- 2007 065 640
- DATABASE COMPENDEX [Online] ENGINEERING INFORMATION, INC., NEW YORK, NY, US; April 2002 (2002-04), RACHEL ANITA ET AL: "Use of porous lavas as supports of photocatalysts" XP002492289 Database accession no. E2004148102116 & CATAL. COMMUN.; CATALYSIS COMMUNICATIONS APRIL 2002, vol. 3, no. 4, April 2002 (2002-04), pages 165-171,

## Description

### Field

The present invention relates to a photocatalytically active composition and to a method for its manufacture. In particular, the invention relates to the uses of photocatalytically active compositions in mortar and concrete formulations.

### Background

Photocatalytically active particles have found their use in urban and industrial environment for decomposing created deleterious or malodorous impurities both in air and in water. In general, these particles may be useful in purification and sterilization of waste products in applications like self cleaning surfaces and antibacterial coatings. As concrete is the most used construction material in the world the quality of built environment depends considerably on the quality of concrete structure surfaces and their aesthetical appearance. A typical flaw type is discoloration due to for example dirt, rust, mould or algae. Photocatalytically active particles incorporated into or on concrete structures offer presently an interesting research field.

So far, the most promising photocatalytically active material is based on nano crystalline titanium dioxide. It is a semiconductor and can be activated by light. Under illumination electron is lifted into the conduction band and a hole is created. These electrons and holes participate in reduction and oxidation reactions with their surroundings breaking down any organic material. Furthermore, even nitrogen and sulphur oxides may be oxidised into respective nitrates or sulphates. These reactions enable the surfaces occupied with photocatalytically active titanium to remain clean and to reduce the concentration of oxides in air in contact with such surfaces. Other materials presenting similar features have been studied.

The addition of photocatalytically active titanium oxide into concrete has been recently studied with increasing interest. It has been found to be effective in breaking down of organic materials and even enhancing simultaneously other desired properties such as frost resistance or resistance to chloride diffusion. Despite of the acknowledged advantages it is still not clear how this technology should be applied in an industrial scale in the cement or concrete industry. There are several drawbacks due to the very fine crystal or particle size of the titanium dioxide to be incorporated. One is a technical issue of providing an adequately homogenous dispersion in the concrete matrix, another one is to ensure good flowing characteristics of the premixes to be used. Further, it is important for occupational hygiene reasons to reduce the troublesome and hazardous dusting feature when handling this fine powder or compositions thereof. Naturally, the applied processes should also be economically feasible.

WO9805601 describes a hydraulic binder, a cement composition, a dry mix and architectural concrete comprising photocatalyst particles which are able to oxidize polluting substances in the presence of light, air and environmental humidity, added into the bulk of the material. A preferred photocatalyst is titanium dioxide. These products are prepared by simply adding the photocatalyst to the desired formulation and subsequently mixing according to any technique known in the art by using both an automatic mixer and manually. As TiO₂ is added to the actual concrete formulation including added water, the mixing time required to obtain any reasonable dispersion must be long. Furthermore, the handling of fine TiO₂ powder inevitably inflicts dusting problems.

EP0633064B1 discloses photocatalyst composite comprising a substrate having photocatalyst particles such as titanium oxide adhered thereon via a specific less degradative adhesive and process for producing this composite. The less degradative adhesive is a silicon compound or cement. Substrates to be used include ceramics, glasses, plastics, elastomeres, wood, paper and metallic articles. Further, this patent provides a coating composition comprising a dispersion of photocatalyst particles and adhesive in a solvent.

Similarly an old publication GB849175 discloses a white coating composition for coating a precast concrete block. This coating composition consists of a white cement e.g. Portland cement and white additives, the white additive including finely divided titanium dioxide. This titanium dioxide has an anatase structure and particle size between 0.0003 - 0.001 mm. A self cleaning effect by rain water flush has been observed and the phenomenon or mechanism of hydratated titanium dioxide covering the dirt particles is discussed.

US2006116279 discloses a composite particle comprised of a larger particle and, supported thereon, smaller particles wherein the smaller particles are photocatalysts-containing fine particles having an average particle diameter in the range of 0.005 µm to 0.5 µm as calculated from a BET specific surface area, and the larger particle has an average particle diameter in the range of 2 µm to 200 µm as measured by the laser diffraction scattering particle size measuring method. The smaller particles refer to TiO₂ particles which are used as a composite material together with an inorganic material such as silica or a Bronsted acid salt, preferably phosphate. This inorganic material is responsible for the binding effect of the smaller particles onto the larger particles. The composite particles are produced by dry mixing under specific conditions determined by the selection of suitable parameters based on e.g. ball mill configuration. This type of mixing will eventually break down the original particulate structure of the larger and smaller particle precursors used and pulverize them into a bound composite product which is finely devided powder.

DE 10 2005 052397 discloses a mixture comprising a binder, a granular aggregate having a layer containing photocatalytic material and an additive containing a photocatalytic material as well as a process for the production of granular material with a layer of photocatalytic material for forming the aggregate.

There are no details available on how to solve the handling issue of a dry premix containing finely devided photocatalytically active powder though it is obvious that such a fine powder is always problematic to handle due to its mechanical properties especially in industrial scale and surroundings such as concrete or mortar industry. No specific attention has been paid to the influence of dispersing the fine photocatalytically active particles uniformly into a dry mixture or premix to be used for the end product manufacture.

In order to produce concrete used in structures and pre-cast pieces with self cleaning properties photocatalyst particles or premixes thereof have to be handled on site at the concrete plant. Due to very small particle size, 1-3 µm average particle size, the flowing properties of photocatalyst material are very poor and thus handling with existing equipment is difficult. This means high maintenance and operating costs. Due to small particle size the dust formation during handling forms also a health and environmental problem.

When producing a dry premix or a concrete formulation according to prior art manually or by conventional mixing equipments, the surface concentration of active photocatalyst particles on a concrete end product surface remains low and therefore more pronounced photocatalytic properties would be desirable.

The object of the present invention is to provide a photocatalytically active composition especially suitable for use in concrete or mortar mixtures.

A further object of the present invention is to provide a composition comprising good photocatalyst properties, low dusting characteristics and good flow ability.

Yet, a further object is to provide mortar and concrete formulation or structures capable of enhanced self cleaning.

### Description of the invention

It was surprisingly found that using a equipment capable of producing a high shear rate in manufacturing a photocatalytically active composition a well flowing particulate powder with good photocatalytic properties was obtained thus fulfilling the above objectives.

The present invention provides a composition which is photocatalytically active as set out in claim 1.

The present invention provides further a method for producing said composition as set out in claim 6.

The photocatalytically active composition of the present invention is used in applications such as mortar formulations, concrete and precast concrete as set out in claims 7 and 8, respectively.
Figure 1 shows the surface morphology of the photocatalytically active particles both as measured by SEM (Scanning Electron Microscopy) in 1A and as presented schematically in 1B.
Figure 2 illustrates the influence of energy input on the TiO₂ surface concentration.
Figure 3 shows the impact of photocatalytical activity of a treated concrete surface on NOₓ reduction.
Figure 4 illustrates the influence of increased TiO₂ surface concentration of the treated concrete on its photocatalytical activity.
Figure 5 compares the heat of hydratation due to different methods of manufacturing a concrete composition.
Figure 6 illustrates the flow ability characteristics of various ingredients.

### Detailed description of the invention

In a first aspect, the present invention provides a photocatalytically active composition comprising carrier material particles and photocatalytically active particles and a hydraulic medium. The photocatalytically active particles are attached to the surface of said carrier material particles adhering to said surfaces when in dry composition, the surface coverage of said carrier material particles is at least 20 %, and the amount of photocatalytically active particles measured as a bulk quantity of the photocatalytically active composition is from 10 to 75 % by weight, and the composition after coating is defined by d₈₀ is < 200 µm and d₂₀ is < 0.3 µm. When in dry form the composition of the particles comprises thus carrier material particles coated with photocatalytically active particles. The extent of the surface coverage is dependent on the photocatalytically active particles, e.g. titania powder grade, and the parameters of the coating method applied, e.g. agitation energy input of mixing. The surface coverage is at least 20 %, such as from 50 to 90 %, more preferably at least 60 % in order to ensure high enough photocatalytical performance, most preferably from 60 to 80 %. The coating particles do not form a composite with the carrier particles or even a uniform coating layer, but rather a discrete particle distribution of photocatalytically active particles homogenously spread across the surfaces of the carrier material particles forming thus what is referred to herein as "coated" carrier material particles.

The term "carrier material particle" as used herein means robust and dense particles. These particles are made of sintered, molten and/or glassy material due to the manufacturing methods used. The carrier material particles are additions according to EN 206-1 standard suitable for use as concrete or mortar raw material. Materials containing CaO, MgO, SiO₂ and/or mixtures thereof, metallurgical slags, ground granulated blast furnace slag according to prEN 15167 standard, or other inert material suitable for use as concrete or mortar raw material or precursor may be used. Preferably, the carrier material particles are metallurgical slag, more preferably granulated blast furnace slag or ground granulated blast furnace slag according to prEN 15167 standard.

The photocatalytically active particles used in this composition are able to oxidize polluting material, such as organic substances originating from industrial waste emissions, VOC, benzene compounds, fluorides or NOₓ emissions from vehicle exhaust gas, in the presence of light, air and humidity. Typical photocatalytically active materials compatible with other concrete or mortar ingredients and the preparation method of the present invention are for example tungstates, MeWO₄, titanates, strontium titanates, SrTiO₃ and titania. Possible materials are also composites such as WOₓ/TiO₂, TiO₂/SiO₂, and Ln₂O₃/TiO₂ wherein Ln=Eu,Pr and/or Yb. The preferred material is titanium dioxide, TiO₂, in particulate form. These photocatalytically active titanium dioxide particles may have a cystal structure of anatase, rutile or a mixture thereof. The titanium dioxide to be used may further include minor amounts of impurities or dopants such as Fe, V, Cr, Mn, Co, Ni, Ag, or Sn influencing its photocatalytical activity.

The amount of photocatalytically active particles measured as a bulk quantity of the inventive photocatalytically active composition is from 10 to 75 % by weight. Preferably, the amount is from 20 to 70 % by weight, most preferably from 40 to 60 %. The aim is to provide a final TiO₂ surface coverage on e.g. a concrete surface which is capable of providing an adequate oxidization of polluting material. The target amounts are around 120 g TiO₂/m².

In a preferred embodiment, the photocatalytically active composition comprises said titanium dioxide particles having a 99,9 % anatase cystal structure and a crystal size less than 100 nm, preferably less than 40 nm.

One important parameter linked to the crystal size is the specific surface area, BET, which should be as large as possible to enhance the intrinsic photocatalytical property as discussed in the Ravaska, E., M. Sc Thesis, 2005, p. 28-29. BET of the presently used titanium dioxide particles is more than 15 m²/g, such as from 15 m²/g to 400 m²/g, preferably more than 50 m²/g, such as from 50 m²/g to 300 m²/g, most preferably from 100 m²/g to 300 m²/g. The particle size, d₅₀ is preferably 5 µm or less, more preferably less than 3 µm, most preferably between 1 µm to 3 µm.

Suitable presently commercially available titanium dioxide powders comprise cystal sizes from 5 to 70 nm and surface areas from 15 to 400 m²/g, preferably from 5 to 25 nm and 50 to 300 m²/g, respectively. Examples of commercial titanium dioxide powders are Kemira Finnti N100 (crystal size 20 nm, surface area about 100 m²/g, Kemira Pigments Oy) and Degussa P25 (crystal size 25 nm, surface area 50 m²/g, Degussa GmbH).

The photocatalytical activity of TiO₂ powder is typically defined in terms of its acetone formation rate. The higher the rate, the more efficient is the oxidizing power. The acetone formation rate of the photocatalytically active particles used in the inventive composition is more than 1000 ppm acetone/h. This is reflected in the applications wherein the final photocatalytical activity of a surface is dependent on the intensity and amount of the photocatalytically active substance included therein.

The photocatalytically active composition according to the invention further comprises a hydraulic medium. This term "hydraulic medium" means a dry particulate powder of material suitable for use in concrete and mortar formulations which has the property of forming a mixture or paste with water and subsequently being able to set and harden. Hydraulic cements, for example, are materials which set and harden after combining with water, as a result of chemical reactions with the mixing water and, after hardening, retain strength and stability even under water. The hydrates formed on immediate reaction with water are essentially insoluble in water e.g. Portland cement, which is made primarily from limestone, certain clay minerals, and gypsum. Lime mortars are hydraulically active but they do gain strength very slowly from adsorption of CO₂. Setting and hardening of hydraulic cements is caused by the formation of water-containing compounds, forming as a result of reactions between cement components and water. Preferably, low alkali Portland cements are used in the present inventive composition, such as white cement or gray cement, most preferably white cement as the alkali metal ions have an impairing effect.

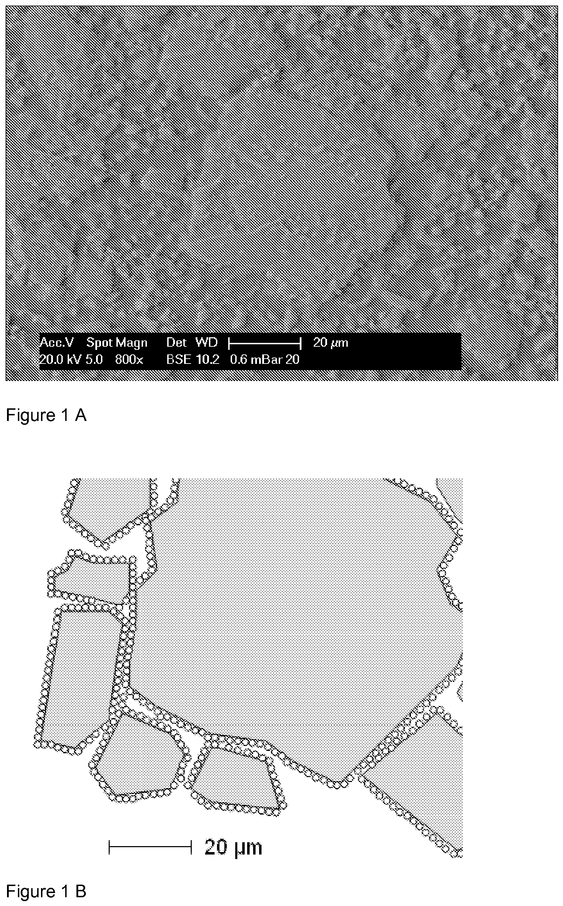

The inventive photocatalytically active composition comprises essentially of carrier particles which are coated with said photocatalytically active particles as shown by one specific example in figure 1. The surface morphology of these coated particles is characterised by the small photocatalytically active particles attached onto the surface of the carrier particles randomly, but spread across the whole of the surfaces in a uniform manner. Figure 1B is a schematic overview of the coated inert carrier particle and figure 1A is a SEM image of the true cross section of a larger carrier agglomerate together with smaller fragments and grains as one example.

The photocatalytically active composition according to this invention is a powder-like particulate product. Many combinations of different particle and crystal sizes are possible. The particle size distribution defined by d₈₀, wherein 80 % by weight of the particles have a diameter (d₈₀) which is less than 200 µm,preferably less than 150 µm and more preferably less than 100 µm in order to comply most suitably with the other ingredients in the blend. Typically cement has particle size less than 90 µm, preferably between 15 to 20 µm. The size of the photocatalytically active composition is mainly essentially determined by the size or fineness of the carrier material. For example, the specific surface of granulated blast furnace slag is from 100 m²/kg to 1000 m²/kg, preferably from 275 m²/kg to 700 m²/kg determined in accordance with the air permeability method specified in EN 196-6, most preferably about 500 m²/kg.

According to a preferred embodiment of the invention the average particle size ratio of the photocatalytically active particle and the carrier material particle is from 0.05 to 0.2.

According to the invention, the particle size distribution of the photocatalytically active composition is defined by d₂₀ less than 0.3 µm and d₈₀ less than 200 µm.

This composition may further comprise colouring agents, dyes or pigments typically usable in mortar or concrete formulations. Furthermore, the composition may contain grinding aids, plasticizers, air entrainment agents or any other typical mortar or concrete formulation ingredients, which do not decrease the photocatalytic activity of the photocatalytically active particle included in the photocatalytically active composition of the invention.

The photocatalytically active composition according to the invention is in dry form and has a storage stability over at least two months, preferably at least a month. Due to the adherence of the photocatalytically active particles onto the carrier particle surfaces the handling and particle flow properties are mainly determined by the particle size distribution of the more bulky carrier particles. Handling the fine loose TiO₂ powder generates dust and problems with blockages due to the poor flow properties of the finer TiO₂ powder. The influence of coating the carrier particles dramatically reduces the amount of fine TiO₂ powder, dusting and improves the particle flow of the material. Mechanical properties essentially similar to other concrete ingredients are shown as examples. The superior particle flow ability reduces blockages due to material sticking. Because of these favourable mechanical properties standard concrete manufacturing equipment can be used. Furthermore, using the most preferable surface area of about 500 m²/kg for the carrier will facilitate the dispersion of the TiO₂ particles further within the concrete or mortar mixture.

This photocatalytically active composition was observed to provide an enhanced photocatalytical activity compared to prior art compositions available when used in mortar or concrete or cast concrete applications.

This composition can be used as an additive in various applications requiring photocatalytic activity, good mechanical properties and especially the ability of this property to enhance the efficiency of self cleaning. Possible applications may be found in air cleaning systems, glassware, water purification applications or appliances, coatings for cars, mirrors, wallpaper, towels, curtins and various building or decorative materials including ceramics and paints. In the second aspect, the invention provides a method for producing a photocatalytically active composition as defined above. This method comprises coating surfaces of carrier material particles with photocatalytically active particles in the presence of a hydraulic medium using a high shear mixing. The method comprises introducing said photocatalytically active particles, said carrier material particles, and said hydraulic medium, into a mixing apparatus, and mixing the introduced components dry with a high shear rate or high energy wherein the high energy introduced into mixing is at least 10 kWh/tonne, and collecting the resulting photocatalytically active composition. The composition is formed by applying high shear forces by agitation, such as mixing or intergrinding without pulverising the materials, for a few minutes to the intimate dry blend of said carrier material particles and photocatalytically active particles and dry hydraulic medium. This enables a uniform mixing of the titanium dioxide, even distribution of photocatalytically active particles on the carrier material particles and formation of stable particle-like coating on the surface thereof. Preferably, an agitated mill which is able to create the required high shear is used. The intergrinding or mixing energy required to be supplied to the mill is at least 10 kWh/tonne, preferably from 10 to 50 kWh/tonne, more preferably from 15 to 40 kWh/tonne. The intergrinding energy naturally depends on choice of carrier material but should be high enough to enable a reasonable adhesion of the TiO₂ particles to the carrier surface, but on the other hand an, extensive use of energy will give an undesirably strong grinding effect on the carrier particles.

The photocatalytically active composition obtainable by this method is a powder-like particulate product which yet has an essentially unchanged mean particle size or at least high enough mean particle size to avoid undesirable dusting. An initial breaking of larger carrier particles may occur and the mixing or intergrinding may disperse the photocatalytically active particles agglomerates when coating the carrier particles. The particle size distribution of the composition before coating is defined by d₈₀, wherein 80 % by weight of the particles have a diameter (d₈₀) which is preferably less than 150 µm, more preferably less than 100 µm and most preferably less than 50 µm as the upper limit. The particle size distribution of the composition before coating is further defined by d₂₀ wherein only 20 % by weight of the particles have a diameter (d₂₀) which is preferably less than 0.6 µm, more preferably less than 0.9 µm and most preferably less than 1.0 µm as the lower limit. The composition after coating is defined by d₈₀ which is less than 200 µm, preferably less than 150 µm and more preferably less than 100 µm and by d₂₀ which is less than 0.3 µm, preferably less than 0.6 µm and more preferably less than 1.2 µm.

The weight proportion of titanium dioxide to the inert carrier material is preferably between 0.1 and 3 in order to ensure good handling properties and performance, more preferably between 0.5 and 3, most preferably between 1 and 2. The time required for mixing the composition is typically only a few minutes for example less than 10 min, preferably less than 5 min depending on the energy used.

Equipment suitable for dry-grinding and simultaneous mixing of dry particulate solids and suitable for use in the present invention is disclosed for example in WO9801225. In this apparatus layout the mixing effect is achieved by means of a rapidly rotating stirrer or rotor which is able to create pressure forces and high shear forces without pulverising the materials between the rotor rods, grinding media bodies and product materials. This fine-grinding technology can be adapted and used for high energy mixing according to the present invention. The rod radial high speed is about 80 r.p.m. and supply of grinding energy to the mill may be in the region of 1-100 KWh/tonne. In a preferred embodiment the components are processed in a vertical mill filled with grinding media held in motion by rotating rotor. Suitable high speed mixer or grinding mill is such as Svedala Agitated Mill, SAM (Svedala AB). Principle of the mill has been described in WO9801225.

In a yet further aspect, the present invention thus provides a photocatalytically active composition produced by the above described inventive method comprising carrier material particles coated with photocatalytically active particles in the presence of a hydraulic medium.

As further aspects, the invention provides uses of the photocatalytically active composition in producing photocatalytically active mortar or concrete formulations and structures. The dry photocatalytically active composition according to the invention is easily handled, bagged and stored using conventional concrete plant equipment and does not require pre-mixing with water or separate slurry component to the concrete or mortar mix. The dry photocatalytically active composition according to the invention is mixed with the conventional components of concrete, such as cement and sand, for a few minutes. Subsequently water is added to the mixture and the mixing is continued until the formulation is complete. A homogenous distribution of photocatalytically active particles is easily reached in a short time as the photocatalytically active composition mixes without difficulty with the concrete or mortar ingredients due to size match. Any conventional way of mixing or mixing apparatus may be used.

Use of the dry photocatalytically active composition according to the invention enables good mixing with the concrete or mortar ingredients and homogenious distribution of e.g. TiO₂ particles within the formulations resulting in good dispersion. When water is added to this mixture the adherence of the TiO₂ particles onto the inert carrier material surface is reduced thus enabling the TiO₂ particles to enter the paste of the forming concrete mixture and migration onto the concrete surface to be exposed to light. This occurrence of the TiO₂ particles in the paste allows the TiO₂ to avoid acting as a hydratation seeds and to become deactivated, which is commonly the case if fine TiO₂ powder is used or if a slurry of TiO₂ powder in water is applied. Thus, more active TiO₂ particles are available at the surface of the concrete after setting and hardening compared to mixing fine TiO₂ particles conventionally into the concrete mixture. The present invention will not be limited to this theory. However, the difference in the heat of hydratation was verified experimentally as shown by the subsequent examples.

Measurements of the surface concentrations of TiO₂ or TiO₂ particles on the concrete surface after setting and hardening confirmed that the amount of photocatalytically active particles is increased compared to conventional mixture of TiO₂ particles with other concrete formulation ingredients. The same advantage is observed when applying the inventive photocatalytically active composition into a mortar formulation.

The present invention provides as yet in another aspect the use of the photocatalytically active composition in the preparation of a material for maintaining a clean surface thereof when such surface is exposed to light based on the self cleaning property of the surface derived from said photocatalytically active composition.

Thus the present invention provides further mortar and concrete formulations and structures, such as precast concrete, comprising the use of the photocatalytically active composition of present invention as an additive during the manufacturing process of said mortar, concrete or precast concrete products. Preferably the photocatalytically active composition is used as a dry powder-like additive, a premixture, in concrete or mortar formulations or precast concrete.

The concrete surfaces manufactured using the inventive photocatalytically active composition exhibit photocatalytical activity greater than 10 ppm/h, preferably greater than 20 ppm/h, in terms of acetone formation rate.

The photocatalytic impact of thus manufactured concrete surfaces on the reduction of nitrogen oxides show that the concentration of NOₓ pollutants may be at least halved, preferably decreased even by 70 %.

The following examples are intended to illustrate, but not to limit, the scope of the invention.

### Examples

### Example 1.

A photocatalytically active composition for use as an additive in concrete and mortar formulations is prepared by introducing into a SAM agitator (Svedala AB) a dry mixture comprising 50 % by weight TiO₂ particles (N100, Kemira Pigments Oy), 25 % ground granulated blast furnace slag (Merit 5000, Merox AB) and 25 % cement (Aalborg White® white cement or Cementa Anläggnings Cement, gray cement). The agitator is used with grinding energy of 20 kWh/ton for a few minutes.

### Example 2. (not according to the invention)

An other photocatalytically active composition is prepared by introducing into a SAM agitator (Svedala AB) a dry mixture comprising 25 % by weight TiO₂ particles (N100, Kemira Pigments Oy) and 75 % ground granulated blast furnace slag (Merit 5000, Merox AB). The agitator is used with grinding energy of 20 kWh/tonne for a few minutes. The appearance of the coated slag is similar to the composition of example 1, but the results in concrete formulations are not equally good.

### Example 3.

For preparing a concrete formulation, a regular concrete mixer is filled up with the photocatalytically active composition as prepared in example 1, Portland cement and standard aggregates. The formulation is

| | |
|---|---|
| Portland cement | 336 kg/m3 |
| Aggregates | 1817 kg/m3 |
| Water | 173 kg/m3 |
| Superplasticer | 4,43 kg/m3 |
| Air entrainer | 0,086 kg/m3 |

The dry ingredients are mixed together for half a minute, subsequently adding water containing the air entrainer in a volume ratio of 0.52 water to cement. The mixture is stirred for a minute and a half, subsequently adding the superplasticizer. The final mixing is about one minute after which the concrete formulation is ready for use.

### Reference example 4.

For comparison with the coated carrier particles and conrete made thereof a reference formulations are prepared.

### Concrete formulation reference A.

The dry cement and aggregates are mixed in a conventional mixer in a weight ratio of 1:2, respectively for about half a minute. About 40 % of the total amount of water is added to this mixture and mixed further for one minute. A TiO₂ "milk" is prepared by mixing together the rest of the water, superplasticizer and TiO2 powder in a separate vessel. This TiO₂ "milk" is introduced into the mixer followed by mixing for 2 minutes.

### Concrete formulation reference B.

Dry TiO₂ powder is mixed with cement and aggregates in a concentional mixer for half a minute. Water containing 0.05 w-% of an air entrainer in a volume ratio of 0.6 water to cement is added. The mixture is stirred for a minute and a half, subsequently adding 1 w-% of plasticizer. The final mixing is about one minute after which the concrete formulation is ready for use

### Example 5.

Influence of the mixing energy input is studied by mixing the composition as prepared in example 1 with 10 (sample A), 20 (sample B), 40 kWh/tonne (sample C) and for reference (sample D) mixing with a regular concrete mixer. Subsequently, the compositions are used to manufacture concrete surfaces according to example 3.

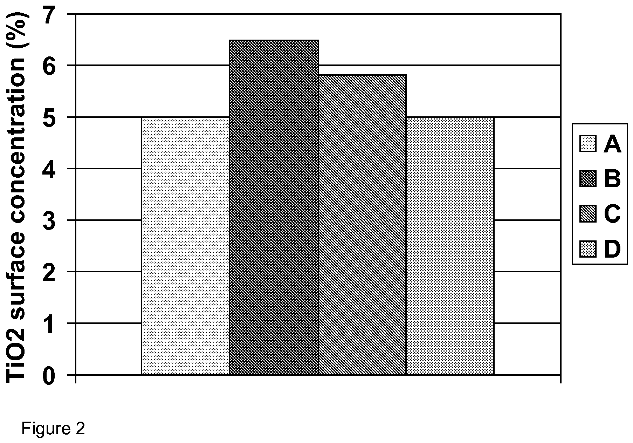

Figure 2 shows the influence of energy input on the TiO₂ surface concentration in %.

### Example 6.

The formation rate of acetone is measured for a concrete samples prepared according to example 3 in analogy to as described in FI20040186
These samples contain 0 % and 6 % TiO₂ of the cement mass. The formation rate of acetone was compared to that of Pilkington Activ glass in one hour experiment. The results show that the activity is considerably higher than in the glass sample and that it remains at a high level, more than 20 ppm/h, over a longer period of time.

| Acetone formation, ppm/h | |
|---|---|
| | |
| 0 % TiO2, day 0 | 0,3 |
| 6 % TiO2, day 0 | 23 |
| 6 % TiO2, day 2 | 79 |
| 6 % TiO2, day 28 | 52 |
| 6 % TiO2, day 37 | 55 |
| 6 % TiO2, day 62 | 39 |
| Pilkington Active glass | 1,8 |

### Example 7.

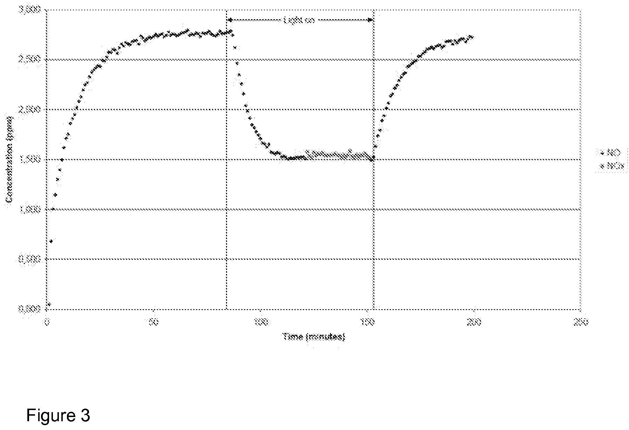

A concrete sample prepared according to examples 1 and 3 resulting in TiO2 concentration of 12 % by weight is studied for the impact on NO/NO_{X}. The results provided by figure 3 show that 50 % reduction in the NO concentration (in ppm) is achieved at 300 µW/cm2 illumination.

### Example 8.

A concrete sample A is prepared by applying a coating of the mortar prepared according to examples 1 and 3 onto the concrete surface. For reference, a concrete reference sample B is prepared similarly according to reference example 4 reference B using conventional mixing in preparing the mortar.

The bulk TiO₂ concentration of both samples is 6 % by weight. The measurement of the TiO₂ surface concentration for A and B gives 4.6 at-% and 3.7 at-%, respectively determined by SEM-EDS.

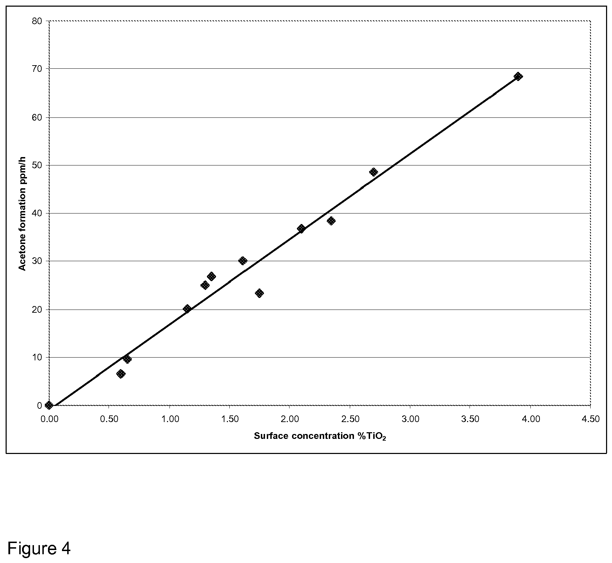

The photocatalytical response in ppm/h (acetone formation rate) as a function of surface concentration in atomic-% is measured for these two samples (figure 4).

### Example 9.

The heat of hydration in concrete preparation is measured using four different preparation methods. In method A the concrete is prepared according to reference example 4 A wherein a TiO₂ slurry (final bulk concentration 6 w-%) is used. In method B TiO₂ is added as a powder according to reference example 4 B (6 w-%). In method C no TiO2 is added (regular cement manufacturing). In method D the concrete was prepared according to examples 1 and 3 (6 w-% TiO₂).

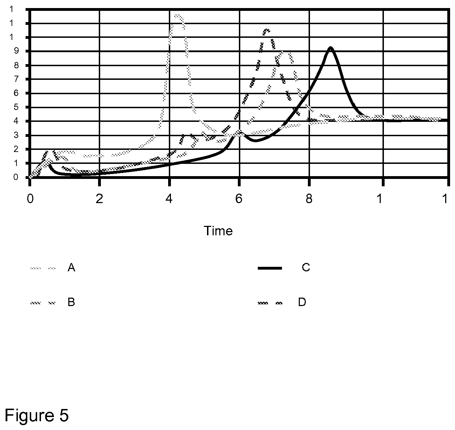

The results shown in figure 5 clearly show that when TiO₂ is added as a slurry there is a strong involvement of titania with cement reactions and a hydratation occurs wherein titania acts as seeds and is thus immobilized and deactivated into the bulk decreasing the possibly available TiO₂ surface concentration. When TiO₂ coated carrier is well disperged into the paste as is the situation in case D, the paste will be able to carry the active TiO₂ species onto the concrete surface and only a minor amount will be trapped into the bulk as seeds and deactivated.

### Example 10.

A SEM cross section image in figure 1A measured from a sample prepared according to example 1 shows TiO₂ particles adhered onto the surface of slag carrier particles. A comparative schematic figure 1B is constructed for better understanding the structural configuration obtained by using the effect of dry high energy mixing for preparation of the photocatalytically active composition.

### Example 11.

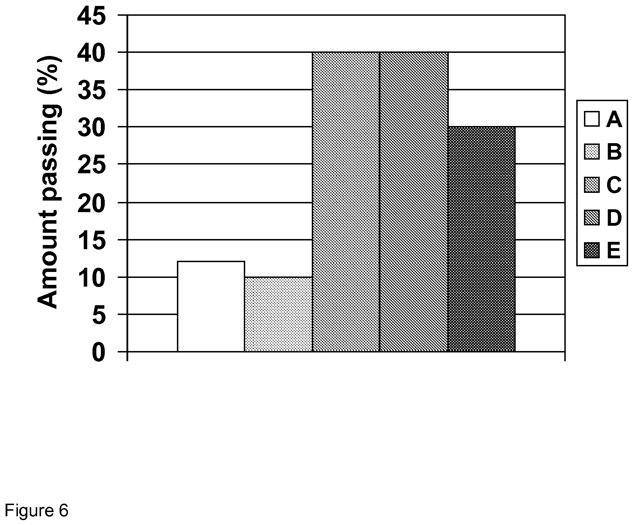

The flow ability of possible cement ingredients is measured for studying the effect of coating the slag with TiO₂ particles. The results are shown in figure 6.
Sample A: Dry TiO₂ powder
Sample B: a mixture of TiO₂ powder and slag before mixing with high shear
Sample C: a coated slag prepared according to example 1
Sample D: Cement as such
Sample E: slag as such

Flow abilities measured according to Cementa Research Method 94/17 showed that the characteristics of the coated carrier particles are equally good compared to cement properties and no signs of sticking due to fine TiO₂ powder are visible.

## Claims

1. A dry photocatalytically active composition comprising carrier material particles coated with photocatalytically active particles in the presence of a hydraulic medium,
- wherein said photocatalytically active particles are attached to the surfaces of said carrier material particles adhering to said surfaces when in dry composition,
- wherein the surface coverage of said carrier material particles is at least 20 %,
- wherein the amount of photocatalytically active particles measured as a bulk quantity of the photocatalytically active composition is from 10 to 75 % by weight, and
- wherein the composition after coating is defined by d₈₀ is < 200 µm and d₂₀ is < 0.3 µm.

2. A composition according to claim 1 wherein the average particle size ratio of said photocatalytically active particles and said carrier material particles is from 0.05 to 0.2.

3. A composition according to claim 1 or 2 wherein said photocatalytically active particles comprise titanium dioxide.

4. A composition according to any of the claims 1-3 wherein the crystal size and specific surface area of said photocatalytically active particle is from 5 nm to 70 nm and from 15 m²/g to 400 m2/g, respectively.

5. A composition according to any of the claims 1-4 wherein said carrier material particles comprise granulated blast furnace slag.

6. A method for producing a dry photocatalytically active composition according to any one of claims 1 to 5 comprising carrier material particles coated with photocatalytically active particles in the presence of a hydraulic medium, comprising introducing said photocatalytically active particles, said carrier material particles, and said hydraulic medium, into a mixing apparatus, and mixing the introduced components dry with a high shear rate or high energy wherein the high energy introduced into mixing is at least 10 kWh/tonne, and collecting the resulting dry photocatalytically active composition.

7. A mortar formulation comprising the dry photocatalytically active composition of any of the claims 1-5 as an additive.

8. Use of the dry photocatalytically active composition of any of the claims 1-5 as an additive during the manufacturing process of mortar, concrete or precast concrete products to achieve a self-cleaning property.

## Patentansprüche

1. Trockene, photokatalytisch aktive Zusammensetzung, umfassend Trägermaterialpartikel, die mit photokatalytisch aktiven Partikeln in Gegenwart eines Hydraulikmediums beschichtet sind,
- wobei die photokatalytisch aktiven Partikel an die Oberflächen der Trägermaterialpartikel gebunden sind und, wenn in trockener Zusammensetzung vorliegend, an den Oberflächen haften,
- wobei die Oberflächenbedeckung der Trägermaterialpartikel wenigstens 20 % beträgt,
- wobei die Menge an photokatalytisch aktiven Partikeln, bezogen auf die Hauptmenge der photokatalytisch aktiven Zusammensetzung, von 10 bis 75 Gew.-% beträgt und
- wobei die Zusammensetzung nach dem Beschichten durch d₈₀ < 200 µm definiert ist und d₂₀ < 0,3 µm beträgt.

2. Zusammensetzung gemäß Anspruch 1, wobei das Verhältnis der mittleren Partikelgrößen der photokatalytisch aktiven Partikel und der Trägermaterialpartikel von 0,05 bis 0,2 beträgt.

3. Zusammensetzung gemäß Anspruch 1 oder 2, wobei die photokatalytisch aktiven Partikel Titandioxid umfassen.

4. Zusammensetzung gemäß einem der Ansprüche 1-3, wobei die Kristallgröße und die spezifische Oberfläche der photokatalytisch aktiven Partikel von 5 nm bis 70 nm bzw. von 15 m²/g bis 400 m²/g betragen.

5. Zusammensetzung gemäß einem der Ansprüche 1-4, wobei die Trägermaterialpartikel granulierte Hochofenschlacke umfassen.

6. Verfahren zur Herstellung einer trockenen, photokatalytisch aktiven Zusammensetzung gemäß einem der Ansprüche 1 bis 5, die Trägermaterialpartikel umfasst, die mit photokatalytisch aktiven Partikeln in Gegenwart eines Hydraulikmediums beschichtet sind, umfassend Einführen der photokatalytisch aktiven Partikel, der Trägermaterialpartikel und des Hydraulikmediums in eine Mischvorrichtung und Trockenmischen der eingeführten Komponenten mit einer hohen Scherrate oder hohen Energie, wobei die dem Mischen zugeführte hohe Energie wenigstens 10 kWh/Tonne beträgt, und Sammeln der erhaltenen trockenen, photokatalytisch aktiven Zusammensetzung.

7. Mörtelformulierung, umfassend die trockene, photokatalytisch aktive Zusammensetzung gemäß einem der Ansprüche 1-5 als Zusatzstoff.

8. Verwendung der trockenen, photokatalytisch aktiven Zusammensetzung gemäß einem der Ansprüche 1-5 als Zusatzstoff bei einem Verfahren zur Herstellung von Mörtel, Beton oder Fertigbetonprodukten, um eine Selbstreinigungseigenschaft zu erhalten.

## Revendications

1. Composition photocatalytiquement active sèche comprenant des particules de matériau support revêtues de particules photocatalytiquement actives en présence d'un milieu hydraulique,
- dans laquelle lesdites particules photocatalytiquement actives sont fixées aux surfaces desdites particules de matériau support par adhérence auxdites surfaces lorsqu'elles sont dans la composition sèche,
- dans laquelle le taux de recouvrement de la surface desdites particules de matériau support est d'au moins 20 %,
- dans laquelle la quantité de particules photocatalytiquement actives mesurée en termes de quantité globale dans la composition photocatalytiquement active est de 10 à 75 % en poids et
- la composition après revêtement étant définie par un d₈₀ qui est < 200 µm et un d₂₀ qui est < 0,3 µm.

2. Composition selon la revendication 1 dans laquelle le rapport des tailles moyennes de particule desdites particules photocatalytiquement actives et desdites particules de matériau support est de 0,05 à 0,2.

3. Composition selon la revendication 1 ou 2 dans laquelle lesdites particules photocatalytiquement actives comprennent du dioxyde de titane.

4. Composition selon l'une quelconque des revendications 1-3 dans laquelle la taille des cristaux et la surface spécifique desdites particules photocatalytiquement actives sont de 5 nm à 70 nm et de 15 m²/g à 400 m²/g, respectivement.

5. Composition selon l'une quelconque des revendications 1-4 dans laquelle lesdites particules de matériau support comprennent du laitier de haut fourneau granulé.

6. Procédé pour la production d'une composition photocatalytiquement active sèche selon l'une quelconque des revendications 1-5 comprenant des particules de matériau support revêtues de particules photocatalytiquement actives en présence d'un milieu hydraulique, comprenant l'introduction desdites particules photocatalytiquement actives, desdites particules de matériau support et dudit milieu hydraulique dans un appareil de mélange et le mélange des composants introduits à sec avec un taux de cisaillement élevé ou une énergie élevée, l'énergie élevée introduite dans le mélange étant d'au moins 10 kWh/tonne, et le recueil de la composition photocatalytiquement active sèche résultante.

7. Formulation de mortier comprenant la composition photocatalytiquement active sèche selon l'une quelconque des revendications 1-5 en tant qu'additif.

8. Utilisation de la composition photocatalytiquement active sèche selon l'une quelconque des revendications 1-5 en tant qu'additif pendant le processus de fabrication de mortier, de béton ou de produits béton préfabriqué pour obtenir une propriété d'auto-nettoyage.
